Europäisches Patentamt

European Patent Office

Office européen des brevets

(11) Veröffentlichungsnummer: **0 272 441 B1**

(19)

(12) **EUROPÄISCHE PATENTSCHRIFT**

(45) Veröffentlichungstag der Patentschrift: **04.03.92**

(21) Anmeldenummer: **87116839.9**

(22) Anmeldetag: **14.11.87**

Die Akte enthält technische Angaben, die nach dem Eingang der Anmeldung eingereicht wurden und die nicht in dieser Patentschrift enthalten sind.

(51) Int. Cl.⁵: **C08J 3/00**, C08J 3/12, C08L 101/00, //(C08L101/00, 83:04)

(54) **Silikonkautschuk enthaltende Polymerisatpulver, ihre Herstellung und ihre Anwendung als flammhemmendes Additiv.**

(30) Priorität: **27.11.86 DE 3640582**

(43) Veröffentlichungstag der Anmeldung:
**29.06.88 Patentblatt 88/26**

(45) Bekanntmachung des Hinweises auf die Patenterteilung:
**04.03.92 Patentblatt 92/10**

(84) Benannte Vertragsstaaten:
**DE FR GB IT NL**

(56) Entgegenhaltungen:
**EP-A- 0 002 744**
**EP-A- 0 028 344**
**EP-A- 0 166 187**
**DE-A- 2 446 423**

(73) Patentinhaber: **BAYER AG**

**W-5090 Leverkusen 1 Bayerwerk(DE)**

(72) Erfinder: **Fuhr, Karl, Dr.**
**Krüllsdyk 55**
**W-4150 Krefeld 1(DE)**
Erfinder: **Müller, Friedemann, Dr.**
**Am Steinacker 5**
**W-4040 Neuss 21(DE)**
Erfinder: **Lindner, Christian, Dr.**
**Riehler Strasse 200**
**W-5000 Köln 60(DE)**
Erfinder: **Ott, Karl-Heinz, Dr.**
**Paul-Klee-Strasse 54**
**W-5090 Leverkusen 1(DE)**

## Beschreibung

Gegenstand der Erfindung sind Polymermischungen aus partiell vernetztem, teilchenförmigem Siliconkautschuk und mindestens einem thermoplastischen Polymerisat, die sich zur thermoplastischen Verarbeitung oder als Additive für thermoplastische Formmassen eignen.

Die DE-OS-24 46 423 lehrt ein Gemisch aus einem halogenhaltigen aromatischen Polycarbonat oder einem Gemisch von mehreren aromatischen Polycarbonaten, die aber immer Halogen enthalten und 0,5 bis 1,5 Gew.-% Diorganopolysiloxan-Polymer, dessen organische Substituenten Alkyl-, Aryl- oder Vinylreste sind. Während es sich hier um Polykondensate handelt, betrifft die vorliegende Erfindung Polymerisate, deren Flammfestigkeit verbessert wird.

Aus der EP-A-0 166 187 sind pulverförmige Polymermischungen aus Tetrafluorethylen und organischen thermoplastischen Polymerisaten bekannt

Die erfindungsgemäßen Polymermischungen können wie folgt hergestellt werden:

I. Eine Dispersion (A) eines organischen thermoplastischen Polymerisats mit einem mittleren Teilchen-durchmesser ($d_{50}$) von 0,05 bis 30 $\mu$m und einem Feststoffgehalt von 20 bis 60 Gew.-% wird mit einer Dispersion (B) eines Siliconkautschuks mit einem mittleren Teilchendurchmesser ($d_{50}$) von 0,05 bis 3 $\mu$m und einem Feststoffgehalt bis zu 60 Gew.-% so vermischt, daß praktisch keine Agglomerisation der Teilchen stattfindet und daß Mischungen mit 0,01 bis 50 Gew.-% Siliconkautschuk und 99,99 bis 50 Gew.-% thermoplastischen Polymerisat gebildet werden.

II. Die nach I. gebildete Mischung wird bei 20 bis 150 °C und pH-Werten von 7 bis 2 unter Bildung einer feinteiligen Polymermischung koaguliert, so daß während der Koagulation keine nennenswerten Mengen von Siliconkautschukteilchen eines Durchmessers größer als 30 $\mu$m gebildet werden.

III. Das nach II. gebildete Koagulat wird bei 50 bis 150 °C getrocknet.

Eine bevorzugte Ausführungsform arbeitet mit wäßrigen Dispersionen (A) von organischen thermoplastischen Polymerisaten mit einem Teilchendurchmesser ($d_{50}$-Wert) von 0,05 bis 5 $\mu$m: Besonders bevorzugt verwendet man ein Gemisch von Dispersionen organischer thermoplastischer Polymerisate, worin 20 bis 80 Gew.-% feinteiliges Polymerisat (mittlerer Teichendurchmesser $d_{50}$ 0,05 bis 0,15 $\mu$m) und 80 bis 20 Gew.-% grobteiliges Polymerisat (mittlerer Teilchendurchmesser $d_{50}$ = 0,20 bis 0,8 $\mu$m, insbesondere 0,25 bis 0,5 $\mu$m) enthalten sind. In ihnen sind die Polymerisat-Teilchen in unvernetzter, teilvernetzter oder hochvernetzter Form enthalten.

Als Dispergiermedium können Wasser oder organische Lösungsmittel wie Ester, Kohlenwasserstoffe, Halogenkohlenwasserstoffe, Alkohole oder deren Gemische fungieren. Bevorzugtes Medium ist Wasser. Solche Dispersionen sind bekannt, z.B. aus EP-A 28 344 und DE-AS 20 47 427. Es handelt sich um übliche Polymerisatdispersionen, die durch Emulsionspolymerisation oder durch Dispergierung eines fertigen Polymeren erhalten werden können.

Die erfindungsgemäß geeigneten Dispersionen A enthalten vorzugsweise thermoplastische Homo- oder Copolymerisate aus olefinisch ungesättigten Monomeren wie Styrol, $\alpha$-Methylstyrol, p-Methylstyrol, Halogenstyrol, Acrylnitril, Methacrylinitril, Alkylacrylat, Alkylmethacrylat, Maleinsäureanhydrid, N-subst. Maleinimid, Vinylacetat, Vinylchlorid, Vinylidenchlorid, Vinylidenfluorid und/oder thermoplastische Pfropfpolymerisate dieser Monomeren auf Kautschuke mit Glasübergangstemperaturen kleiner als -10 °C, wobei diePfropfpolymerisate 8 bis 80 Gew.-% Kautschuk enthalten.

Als Polymerisate für Dispersionen A sind besonders geeignet: Hompolymere des Styrols, Methylmethacrylats und Vinylchlorids sowie deren Copolymerisate mit wenigstens einem der Monomeren Acrylnitril, Methacrylnitril, N-substituiertes Maleinimid (insbesondere N-Phenylmaleinimid oder N-Cyclohexylmaleinimid), Alkylmethacrylat oder Alkylacrylat sowie Pfropfpolymerisate aus z.B. Polybutadien, Polychloropren oder Styrol-Butadien- bzw. Acrylinitril-Butadien-Copolymerkautschuk mit Gelgehalten (gemessen bei 20 °C) größer als 30 Gew.-%, Alkylacrylatkautschuk, EPDM-Kautschuken (Ethylen-Propylen-Dien-Monomer-Kautschuke) oder Silikonkautschuke, die mit Styrol, $\alpha$-Methylstyrol, Acrylnitril, Methylmethacrylat, Vinylchlorid, Vinylacetat oder Mischungen daraus bepfropft sind.

Die erfindungsgemäß geeigneten Siliconkautschukdispersionen (B) enthalten bevorzugt Wasser als Dispergiermedium. Sie enthalten in dispergierter Form wenigstens teilvernetzte, teilchenförmige Siliconkautschuke mit im wesentlichen chemisch eingebauten Gruppen der allgemeinen Formel

a) $R_2SiO$, $RSiO_{3/2}$, $R_2R^3SiO_{1/2}$, $SiO_{4/2}$ und gegebenenfalls Gruppen der Formel

b) $R^1CH = CH-(R^2)-$, gegebenenfalls in Kombination mit HS-Gruppen

wobei

R = einwertiger, gesättigter Kohlenwasserstoff-Rest, insbesondere $CH_3$, $C_6H_5$, $C_2H_5$, gegebenenfalls durch SH, Halogen, $C_1$-$C_6$-Oxalkyl substituiert

$R^1$ = H, $C_1$-$C_6$-Alkyl, insbesondere H, $CH_3$,

$R^2$ = Einfachbindung, $C_1$-$C_4$-Alkylen, insbesondere -$CH_2$-, -$C_2H_4$-,

$R^3$ = R oder OH.

Die Mengen der einzelnen Siloxaneinheiten sind dabei so bemessen, daß auf 100 Mol Einheiten der Formel $R_2SiO$ 0 bis 0,5 Mol Einheiten $R_2R^3SiO_{1/2}$, 0 bis 10 Mol Einheiten der Formel $RSiO_{3/2}$ und 0 bis 3 Mol Einheiten der Formel $SiO_{4/2}$ vorhanden sind.

In bevorzugten Kautschuken sind mindestens 80 % aller Reste R $CH_3$-Gruppen.

Im Falle der Gruppe $R_2R^3SiO_{1/2}$ ist des weiteren möglich daß einer der drei Reste R eine Hydroxylgruppe darstellt. Besonders bevorzugte Endgruppe ist die Dimethylhydroxysiloxyeinheit.

Die Silikonkautschuke enthalten die Gruppen b) in Mengen von 2 bis 10 Mol-%, bezogen auf die Gesamtheit aller Reste R.

Die Siliconkautschuke sind teilchenförmig und besitzen mittlere Teilchengrößen ($d_{50}$-Werte) von 0,05 bis 3 $\mu$m, insbesondere 0,09 bis 0,8 $\mu$m; sie sind wenigstens teilvernetzt, d.h. sie besitzen Gelgehalte von größer 20 Gew.-%, besonders größer 50 Gew.-%, besonders bevorzugt im Bereich von 73 bis 98 Gew.-%.

Die Siliconkautschuke werden wie folgt durch Emulsionspolymerisation hergestellt:

Die Herstellung einer Emulsion eines langkettigen OH-terminierten Siliconöls durch Emulsionspolymerisation ist z.B. in US-PS 2 891 910 und in GB-PS 1 024 024 beschrieben. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgiermittelkonzentration gering gehalten werden, und man hat nach Fertigstellung der Emulsion wenig störende Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Derartige Co-Emulgatoren können nichtionischer sowie anionischer Natur sein. Als anionische Co-Emulgatoren kommen insbesondere Salze der obengenannten n-Alkyl-oder Alkylbenzolsulfonsäuren in Frage. Nichtionogene Co-Emulgatoren sind z.B. Polyoxyethylenderivate von Fettalkoholen, und in Fettsäuren, Beispiele für derartige Emulgiermittel sind POE (3)-Laurylalkohol, POE (20)-Oleylalkohol, POE (7)-Nonylphenol und POE (10)-Stearat (die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt . Die anderen Bezeichnungen sind analog.)

Im allgemeinen sind solche Siliconöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Siliconöls ist möglich z.B. über die Temperatur bei der Gleichgewichtsbildung zwischen Siloxan, Wasser und dem durch Ringöffnung des Siloxans zunächst gebildeten Silanol (bzgl. Einzelheiten zum Zusammenhang zwischen Temperatur and Molekulargewicht wird auf die Arbeit von D.R. Weyenberg et. al, J. Polymer Sci. Part C, 27,pp 27-34 (1969) verwiesen).

Die Gruppen b) können in das Siliconpolymer durch Arbeiten in Anwesenheit geeigneter Siloxanaoligomerer eingebaut werden. Geeignete Ausgangsoligomere sind z.B. Tetramethyltetravinylcyclotetrasiloxan oder $\gamma$-Mercaptopropylmethyldimethoxysilan oder dessen Hydrolysat.

Diese funktionellen Oligomeren werden dem Basisoligomer Octamethylcyclotetrasiloxan in den gewünschten Mengen beigefügt.

Analog kann auch der Einbau längerkettiger Alkylreste R, wie z.B. Ethyl-, Propyl- oder dgl., bzw. der Einbau von Phenylgruppen erreicht werden.

Der Siliconkautschuk muß wenigstens teilweise vernetzt sein.

Der Einbau von Verzweigungen oder Vernetzungen kann beispielsweise durch Zugabe von z.B. Tetraethoxysilan oder eines Silans der allgemeinen Formel $RSiX_3$, wobei X eine hydrolysierbare Gruppe, insbesondere den Alkoxyrest darstellte, erfolgen. R hat die im Vorhergehenden beschriebene Bedeutung. Bevorzugt sind R = Methyl und R = Phenyl. Insbesondere bevorzugt sind neben Tetraethoxysilan Methyltrimethoxysilan oder Phenyltrimethoxysilan. Die Siliconkautschuke können auch zusätzlich anorganische Füllstoffe enthalten, wie z.B. $SiO_2$, Talkum.

Bei der Herstellung der Siliconkautschuke durch Emulsionspolymerisation fallen Siliconkautschukemulsionen in wäßrigem Medium (Latices) an mit Feststoffgehalten bis zu 60 Gew.-%, insbesondere bis zu 50 Gew.-%.

Polymermischungen gemäß der Erfindung enthalten teilchenförmige, partiell vernetzte Siliconkautschuke sowie ein thermoplastisches Harz oder Pfropfpolymerisat auf der Basis eines Kautschuks mit einer Glasübergangstemperatur Tg < -10°C.

Die Mischungen enthalten vorzugsweise 0,01 bis 50 Gew.-% Siliconkautschuk, vorzugsweise 5 bis 4 Gew.-%, insbesondere 8 bis 20 Gew.-%, und liegen pulverförmig vor.

Die Mischungen werden hergestellt, indem man die Emulsion eines Siliconkautschuks mit der Emulsion eines Thermoplasten vermischt, so daß praktisch keine Agglomerisation der Teilchen stattfindet, diese Mischung bei 20 bis 150°C und pH-Werten von 7 bis 2 koaguliert und trocknet, so daß während der Koagulation keine nennenswerten Mengen von Siliconkatuschukteilchen eines Durchmessers größer 30 μm gebildet werden.

Ein weiterer Gegenstand der Erfindung ist die Verwendung der erfindungsgemäßen pulverförmigen Polymermischungen als Zusatz zu thermoplastischen Formmassen zur Verbesserung von deren Gebrauchseigenschaften. Hierbei werden vorzugsweise die pulverförmigen Polymermischungen in solcher Menge eingesetzt, daß in der Gemsamtformmasse weniger als 5 Gew.-% Siliconkautschuk (insbesondere weniger als 2,5 Gew.-%) vorliegt.

Durch den Zusatz der erfindungsgemäßen Polymermischungen, werden verschiedene Eigenschaften der Formmassen wesentlich verbessert; so wirken die Zusätze als Antitropfmittel bei Brand der Formkörper. Ihre Wirkung ist der von Polytetrafluorethylen vergleichbar.

Trotz der Gegenwart von Siliconkautschuk werden die Oberflächeneigenschaften nicht gestört. Das Entformungsverhalten, die Schlagzähigkeit und die Wärmeformbeständigkeit werden verbessert.

Die Polymermischungen eignen sich hervorragend als Additiv zu Thermoplasten wie ABS, Polystyrol, HIPS, PVC, Polycarbonate, Polyamide, Polyalkylencarbonsäureester, insbesondere ABS, Bisphenol-A-Polycarbonat, Polycapronamid (Nylon® 6), Polyhexamethylen-diaminoadipinsäureamid (Nylon® 66), Polyethylen- und Polybutylenterephthalat und deren Mischungen.

Beispiele

Beispiel 1

Herstellung einer Siliconkautschukemulsion (im Sinne der Erfindung)

38,4 Gew.-Teile Octamethylcyclotetrasiloxan, 1,2 Gew.-Teile Tetramethyltetravinylcyclotetrasiloxan und 1 Gew.-Teile γ-Mercaptopropylmethyldimethoxysilan werden miteinander verrührt. 0,5 Gew.-Teile Dodecylbenzolsulfonsäure in 58,4 Gew.-Teilen Wasser werden anschließend innerhalb 1 Stunde zugegeben. Dabei wird intensiv gerührt. Die Voremulsion wird mit Hilfe einer Hochdruckemulgiermachine 2 mal bei 200 bar homogenisiert. Man gibt weitere 0,5 Gew.-Teile Dodecylbenzolsulfonsäure hinzu.

Die Emulsion wird 2 h bei 85°C und anschließend 36 h bei Raumtemperatur gerührt. Neutralisiert wird mit Hilfe von 5 n-NaOH. Es resultiert eine stabile Emulsion mit einem Feststoffgehalt von ca. 36 %. Das Polymer besitzt einen Gelgehalt von 82 Gew.-%, gemessen in Toluol, die mittlere Teilchengröße ($d_{50}$) beträgt 0,3 μm (Emulsion 1).

Beispiel 2 (erfindungsgemäß)

Herstellung einer pulverförmigen Polymerkomposition aus partiell vernetztem teilchenförmigem Siliconkautschuk und einem thermoplastischen Polymergemisch.

Eingesetzte Komponenten

2.1) Emulsion eines ABS-Pfropfpolymerisats von 50 % Styrol-Acrylnitril-Gemisch (im Verhältnis von 72:28) auf 50 % teilchenförmigem Polybutadien mit einem mittleren Teilchendurchmesser ($d_{50}$) von 0,4 μm, erhalten durch Emulsionspolymerisation. Die Emulsion hat einen Feststoffgehalt von 30 Gew.-%.
2.2) Emulsion 1)
Die Emulsion 1) wird mit der Emulsion 2.1) vermischt, so daß in der Mischung 10 Gew.-% 1) und 90 Gew.-% 2.1) vorliegen. Die Mischung wird mittels 1,8 Gew.-%, bezogen auf Polymerfeststoff, phenolischer Antioxidanzien stabilisiert. Bei 85 bis 95°C wird die Mischung mit einer wäßrigen Lösung von $MgSO_4$ (Bittersalz) und Essigsäure bei pH-Werten von 4 koaguliert, filtriert und elektrolytfrei gewaschen. Danach wird bei 100°C zu einem Pulver getrocknet.

Dieses Pulver kann mit anderen Thermoplasten compoundiert werden.

Beispiel 3 (erfindungsgemäß)

### Verwendete Materialien

I. Styrol/Acrylnitril-(Gewichtsverhältnis 72:28 )-Copolymerisat mit einem mittleren Molgewicht von 165.000, hergestellt durch Emulsionspolymerisation und anschließend als Pulver isoliert.

II. Styrol/Acrylnitril-Pfropfpolymerisat von 50 Gew.-% Styrol-Acrylnitril-Gemisch (im Gewichtsverhältnis 72:28) auf 50 Gew.-% Polybutadien eines mittleren Teilchendurchmessers ($d_{50}$) von 0,4 und 0,1 $\mu$m, hergestellt durch Emulsionspolymerisation und isoliert durch Koagulation.

III. Siliconkautschuk enthaltendes Polymerisatpulver nach Beispiel 2.

IV. $Sb_2O_3$ (Stibiox MS)®

V. Octabromdiphenylether (DE 79 der Great Lakes Comp.).

VI. für Vergleichsversuch: Hostaflon 2071.®

### Herstellung und Prüfung der Formmassen

Auf einem Innenkneter wurden die Bestandteile I, II, III, IV, V und VI in den in Tabelle 1 angegebenen Mengen (Angaben in Gewichtsteilen) gemischt.

Tabelle 1

| Komponente | I | II | III | IV | V | VI | Additive[*] |
|---|---|---|---|---|---|---|---|
| Vergleich 1 | 54,3 | 25,7 | - | 3,0 | 15,0 | - | 2,0 |
| Vergleich 2 | 54,0 | 25,6 | - | 3,0 | 15,0 | 0,4 | 2,0 |
| Beispiel 3 | 51,5 | 20,5 | 8,0 | 3,0 | 15,0 | - | 2,0 |

[*]) Zusammensetzung der Additive:
1,5 N,N'-Bisstearylethylendiamid
0,4 Calciumstearat
0,1 Baysilon M13 (Bayer AG)®

Die erhaltenen Massen wurden zu Prüfkorpern verspritzt und folgenden Tests unterzogen:
- Schlagzähigkeit nach DIN 53 543 [$a_n$]
- Kerbschlagzähigkeit nach DIN 53 543 [$a_k$]
- Wärmeformbeständigkeit nach Vicat B [Vicat B]
- Brandtest nach Vorschrift Underwriters Laboratories, [UL 94]

Tabelle 2 zeigt die erreichten Prüfdaten:

| | $a_n$ | Vicat B | UL 94[*] 2,5 mm |
|---|---|---|---|
| Vergleich 1 | 60 g[**] | 92 | V-2 |
| Vergleich 2 | 63 g[**] | 91 | V-0 |
| Beispiel 3 | 80 ng[***] | 94 | V-0 |

[*] jeweils nach Lagerung bei Raumtemperatur
[**] gebrochen
[***] ungebrochen

### Beispiel 4 (erfindungsgemäß)

### Verwendete Materialien

I. Aromatisches Polycarbonat aus 10 Gew.-% Tetrabrombisphenol A und 90 Gew.-% Bisphenol A mit relativer Viskosität, gemessen in $CH_2Cl_2$ bei 25°C, von 1,284 (0,5 gew.-%ige Lösung).

II. Thermoplastisches Polymerisat aus Styrol und Acrylnitril mit einem Acrylnitrilgehalt von 23 Gew.-% und einem mittleren Molekulargewicht von 60 000.

III. ABS-Pfropfpolymerisat von 50 Gew.-% Styrol-Acrylnitril-Gemisch (im Gew.-Verhältnis von 72:28) auf 50 % teilchenförmiges Polybutadien eines mittleren Teilchendurchmessers ($d_{50}$) von 0,4 $\mu$m, erhalten

durch Emulsionspolymerisation.

IV. Siliconkautschuk enthaltendes Polymerisat nach Beispiel 2.

V. Triphenylphosphat (TPP)

VI. Pentaerythrittetrastearat (PETS)

VII. für Vegleichsversuch: Teflon 701 N®

VIII. für Vergleichversuch: ABS-Pfropfpolymerisat nach III erhalten durch Emulsionspolymerisation und isoliert durch Koagulation in Gegenwart von 10 Gew.-% Siliciumdioxid mit einer Teilchengröße <10 $\mu$m (bezogen auf die Gesamtmasse von Koagulat und Siliciumdioxid).

Herstellung und Prüfung der Formmassen

a) Herstellung durch direkte Compoundierung aller Komponenten und zwar auf einem Banbury-Innenkneter (Fa. Pomini-Farrel) vom Typ BR (1,2 1) oder Typ OOC (3 1) bei 230 bis 240°C. Die in den Tabellen angegebenen Gew.-Teile werden direkt compoundiert.

**Tabelle 3**

| Komponente | I | II | III | IV | V | VI | VII | VIII |
|---|---|---|---|---|---|---|---|---|
| Vergleich 1 | 58,0 | 17,2 | 13,7 | - | 9,9 | 0,9 | 0,3 | - |
| Vergleich 2 | 58,0 | 17,5 | 3,7 | - | 9,9 | 0,9 | - | 10,0 |
| Beispiel 4 | 58,0 | 17,5 | 3,7 | 10,0 | 9,9 | 0,9 | - | - |

Die Formmassen werden bei 260°C spritzgegossen (Aggregat: Werner-Pfleiderer-Schnecke DKS 275, Schließkraft 275 MP, Schneckendurchmesser 56 mm, Länge L/D-23/1).

Tabelle 4 zeigt die erhaltenen Prüfdaten. Sie werden nach den in Abschnitt A angegebenen Methoden erhalten.

| | $a_n$ UL94/1,6 mm-Stab | $a_k$ | UL 94/1,6 mm-Stab |
|---|---|---|---|
| Vergleich 1 | 29 n.g. | 14 | V-0 |
| Vergleich 2 | 29 n.g. | 14 | V-2 |
| Beispiel 4 | 27 n.g. | 13 | Probenlagerung im Normklima: V-0 Probenlagerung 7 Tage, 70°C: V-1 |

Wie aus den Tabellen und ihren Werten für die Vergleichsversuche hervorgeht, wird durch Zusatz von

7

EP 0 272 441 B1

kleinen Mengen Polytetrafluorethylen die Flammwidrigkeit stark verbessert. Dabei kann das Polytetrafluorethylen sowohl direkt als auch über ein gemeinsames Koagulat mit einem Pfropfpolymerisat zugegeben werden. Im letzteren Fall ist die Oberfläche der hergestellten Formkörper fehlerfrei. Aus den erfindungsgemäßen Beispielen der Tabellen geht aber auch hervor, daß ein Siliconkautschuk, der als wäßrige Dispersion mit der ebenfalls wäßrigen Dispersion eines Pfropfpolymerisats gemischt und gemeinsam ausgefällt wurde, ebenfalls die Flammwidrigkeit stark heraufsetzt und in seiner Antitropfwirkung dem Polytetrafluorethylen entspricht. Diese Wirkung ist dem Siliconkautschuk zuzuordnen. Ersetzt man nämlich den Siliconkautschuk durch ein feinteiliges Siliciumdioxid, so kommt dieser Präparation kein Antitropfeffekt zu. Siliconkautschuk verhält sich im Brandfall deutlich günstiger.

**Patentansprüche**

1. Pulverförmige Polymermischungen aus partiell vernetztem, teilchenförmigem Siliconkautschuk und wenigstens einem thermoplastischen organischen Polymerisat.

2. Verfahren zur Herstellung von partiell vernetzten teilchenförmigen Siliconkautschuk enthaltenden pulverförmigen Polymermischungen, dadurch gekennzeichnet, daß

   I. eine Dispersion (A) eines organischen thermoplastischen Polymerisats mit einem mittleren Teilchendurchmesser ($d_{50}$) von 0,05 bis 30 $\mu$m und einem Feststoffgehalt von 20 bis 60 Gew.-% mit einer Dispersion (B) eines partiell vernetzten Siliconkautschuks mit einem mittleren Teilchendurchmesser ($d_{50}$) von 0,05 bis 3$\mu$m und einem Feststoffgehlat bis zu 60 Gew.-% so vermischt wird, daß keine Agglomerisation der Teilchen stattfindet und daß Mischungen mit 0,01 bis 50 Gew.-% Siliconkautschuk und 99,99 bis 50 Gew.-% organischem thermoplastischem Polymerisat gebildet werden,
   II. die gemäß I. gebildete Mischung bei 20 bis 150°C und pH-Werten von 7 bis 2 unter Bildung einer feinteiligen Polymerischung koaguliert wird, so daß während der Koagulation keine nennenswerten Mengen von Siliconkautschukteilchen eines Durchmessers größer als 30 $\mu$m gebildet werden,
   III. das gemäß II. gebildete Koagulat bei Temperaturen von 50 bis 150°C getrocknet wird.

3. Verfahren gemäß Anspruch 2, dadurch gekennzeichnet, daß als Dispersion (A) eine wäßrige Dispersion eines Polymerisats mit einem mittleren Teilchendurchmesser von 0,05 bis 5 $\mu$m eingesetzt wird.

4. Verfahren gemäß Anspruch 2, dadurch gekennzeichnet, daß die Dispersion (A) 20-80 Gew% Teilchen eines mittleren Durchmessers von 0,05 bis 0,15 $\mu$m ($d_{50}$-Wert) und 80-20 Gew% solche eines mittleren Durchmessers von 0,2 bis 0,8 $\mu$m enthält.

5. Verfahren gemäß Anspruch 2 bis 4, dadurch gekennzeichnet, daß die Polymeren in der Dispersion (A) thermoplastische Polymerisate von Styrol, $\alpha$-Methylstyrol, p-Methylstyrol, Halogenstyrol, Acrylnitril, Methacrylnitril, Alkylacrylat, Alkylmethacrylat, Maleinsäureanhydrid, N-substituiertes Maleinimid, Vinylacetat, Vinylchlorid, Vinylidenchlorid, Vinylidenfluorid und/oder thermoplastische Pfropfpolymerisate dieser Monomeren auf Kautschuke mit Glasübergangstemperaturen kleiner als -10°C sind, wobei die Pfropfpolymerisate Kautschukgehalte von 8 bis 80 Gew.-% aufweisen.

6. Verwendung der Polymermischungen gemäß Anspruch 1 als Zusatz zu thermoplastischen Formmassen.

**Claims**

1. Pulverulent polymer mixtures of partially cross-linked, particulate silicone rubber and at least one thermoplastic organic polymer.

2. A process for the production of pulverulent polymer mixtures containing partially cross-linked particulate silicone rubber, characterised in that
   I. a dispersion (A) of an organic thermoplastic polymer having an average particle diameter ($d_{50}$) of from 0.05 to 30 $\mu$m and a solids content of from 20 to 60% by weight is mixed in such a manner with a dispersion (B) of a partially cross-linked silicone rubber having an average particle diameter

8

($d_{50}$) of from 0.05 to 30 $\mu$m and a solids content of up to 60% by weight that no agglomeration of the particles takes place and mixtures containing from 0.01 to 50% by weight of silicone rubber and from 99.99 to 50% by weight of organic thermoplastic polymer are formed,

II. the mixture formed in accordance with I. is coagulated at 20 to 150°C and at pH values of from 7 to 2 to form a finely divided polymer mixture so that no significant quantities of silicone rubber particles larger than 30 $\mu$m in diameter are formed during coagulation, and

III. the coagulate formed in accordance with II. is dried at temperatures of from 50 to 150°C.

3. A process as claimed in claim 2, characterised in that an aqueous dispersion of a polymer having an average particle diameter of from 0.05 to 5 $\mu$m is used as dispersion (A).

4. A process as claimed in claim 2, characterised in that dispersion (A) contains from 20 to 80% by weight of particles having an average diameter of from 0.05 to 0.15 $\mu$m ($d_{50}$ value ) and from 80 to 20% by weight of particles having an average diameter of from 0.2 to 0.8 $\mu$m.

5. A process as claimed in claims 2 to 4, characterised in that the polymers in dispersion (A) are thermoplastic polymers of styrene, $\alpha$-methyl styrene, p-methyl styrene, halogen styrene, acrylonitril, methacrylonitrile, alkyl acrylate, alkyl mathacrylate, maleic acid anhydride, N-substituted maleiimide, vinyl acetate, vinyl chloride, vinylidene chloride, vinylidene fluoride and/or thermoplastic graft polymers of these monomers on rubbers having glass transition temperatures below -10°C, the graft polymers having rubber contents of from 8 to 80% by weight.

6. Use of the polymer mixtures as claimed in claim 1 as an additive for thermoplastic moulding compositions.

**Revendications**

1. Mélanges pulvérulents de polymères formés de caoutchouc de silicone partiellement réticulé, en forme de particules et d'au moins un polymère organique thermoplastique.

2. Procédé pour préparer des mélanges de polymères pulvérulents, contenant du caoutchouc de silicone partiellement réticulé et sous forme de particules, procédé caractérisé en ce que

I. On mélange une dispersion (A) d'un polymère thermoplastique organique ayant un diamètre particulaire moyen ($d_{50}$) de 0,05 à 30 $\mu$m et une teneur en (B) solide de 20 à 60 % en poids, avec une dispersion (B) d'un caoutchouc de silicone partiellement réticulé, ayant un diamètre particulaire moyen ($d_{50}$) de 0,05 à 3 $\mu$m et une teneur en (B) solide allant jusqu'à 60 % en poids, le mélangeage étant réalisé de façon qu'il ne se produise pas d'agglomération des particules et qu'il se forme des mélanges comportant 0,01 à 50 % en poids de caoutchouc de silicone et 99,99 à 50 % en poids d'un polymère thermoplastique organique ;

II. On provoque la coagulation à 20 jusqu'à 150°C et à des valeurs de pH de 7 à 2 du mélange formé selon (I), avec formation d'un mélange de polymères en fines particules, de manière que, pendant la coagulation, il ne se forme pas de quantités notables de particules de caoutchouc de silicone ayant un diamètre supérieur à 30 $\mu$m ;

III. On sèche à des températures de 50 à 150°C le coagulat formé selon (II).

3. Procédé selon la revendication 2, caractérisé en ce qu'on utilise, comme dispersion (A), une dispersion aqueuse d'un polymère ayant un diamètre particulaire moyen de 0,05 à 5 $\mu$m.

4. Procédé selon la revendication 2, caractérisé en ce que la dispersion (A) contient 20 à 80 % en poids de particules d'un diamètre moyen de 0,05 à 0,15 $\mu$m (valeur de $d_{50}$) et 80 à 20 % en poids de particules d'un diamètre moyen de 0,2 à 0,8 $\mu$m.

5. Procédé selon les revendications 2 à 4, caractérisé en ce que, dans la dispersion (A), les polymères sont des polymères thermoplastiques du styrène, de l'$\alpha$-méthylstyrène, du p-méthylstyrène, d'un halogénostyrène, de l'acrylonitrile, du méthacrylonitrile, d'un acrylate d'alkyle, d'un méthacrylate d'alkyle, de l'anhydride de l'acide maléique, d'un maléinimide substitué sur l'azote, de l'acétate de vinyle, du chlorure de vinyle, du chlorure de vinylidène, du fluorure de vinylidène et/ou de polymères thermoplastiques de greffage de ces monomères sur des caoutchoucs ayant des températures de transition vitreuse inférieures à -10 °C, les polymères de greffage présentant des teneurs en caoutchouc de 8 à 80 % en poids.

6. Utilisation des mélanges de polymères selon la revendication 1 comme additif pour des matières thermoplastiques à mouler.